# EUROPÄISCHE PATENTANMELDUNG

(11) **EP 1 967 423 A2**
(43) Veröffentlichungstag der Anmeldung: **10.09.2008**
(21) Anmeldenummer: 08001678.5
(22) Anmeldetag: 30.01.2008
(51) Int. Cl.: B60R 25/00, H04L 9/00

(54) **Verfahren und Vorrichtung zur Übertragung von Daten und zum Durchführen der Reaktionen auf diese Daten**

(30) Priorität: 05.03.2007 DE 102007010992
(71) Anmelder: Conti Temic microelectronic GmbH, 90411 Nürnberg (DE)
(72) Erfinder: Liebhart, Johannes, 88213 Ravensburg (DE); Röck, Thomas, 88069 Tettnang (DE); Buck, Rainer, 88250 Weingarten (DE); Wilhelm, Günter, 88677 Markdorf (DE); Saile, Frank, 88212 Ravensburg (DE)
(74) Vertreter: Büchner, Jörg

(57) **Zusammenfassung**

Die vorliegende Erfindung betrifft ein Verfahren zur Übertragung von Daten und zum Durchführen der Reaktionen auf diese Daten. Ein derartiges Verfahren findet Anwendungen insbesondere in den Systemen, wobei sicherheitsrelevanten Daten übertragen und bearbeiten werden und ebenfalls sicherheitsrelevanten Reaktionen auf diese Daten durchgeführt werden. Derartige Systeme können beispielsweise Wegfahrsperre für ein Kraftfahrzeug, oder Ver-/Entriegelungseinheit eines Kraftfahrzeugs sein. Ferner betrifft die Erfindung eine Vorrichtung zum Durchführen des erfindungsgemäßen Verfahrens.

Erfindungsgemäß werden die Daten mit zumindest einer Signatur gemeinsam übertragen. Die Signaturen werden aus den Reihenwerten durch die Verknüpfung mit einer Sicherheitsschlüsselreihe erstellt. Die neuen Signaturen für die neuen Daten werden aus den Reihenwerten erstellt, die aus dem jeweiligen vorherigen Reihenwert rekursiv berechnet worden sind. Die Erstellung von Signaturen wird während der Senderuhe bzw. Bearbeitungsruhezeit durchgeführt.

## Beschreibung

Die vorliegende Erfindung betrifft ein Verfahren zur Übertragung von Daten und zum Durchführen der Reaktionen auf diese Daten. Ein derartiges Verfahren findet Anwendungen insbesondere in den Systemen, wobei sicherheitsrelevanten Daten übertragen und bearbeiten werden und ebenfalls sicherheitsrelevanten Reaktionen auf diese Daten durchgeführt werden. Derartige Systeme können beispielsweise Wegfahrspeere für ein Kraftfahrzeug, oder Ver-/Entriegelungseinheit eines Kraftfahrzeugs sein. Ferner betrifft die Erfindung eine Vorrichtung zum Durchführen des erfindungsgemäßen Verfahrens.

Zum Durchführen einer bestimmten Reaktion empfängt ein Steuergerät, einen Befehl in Form von Daten von einem anderen Steuergerät. Falls die zu durchführende Reaktion auf diesen Befehl oder der Befehl an sich vor einer Manipulation gesichert werden muss, dann wird dieser Befehl bzw. das Signal, das diesen Befehl in sich trägt, vorzugsweise verschlüsselt übertragen und wird die Reaktion erst dann durchgeführt, wenn das empfangene Signal vom dieses Signal bearbeitenden Steuergerät authentifiziert ist.

Es sind bereits zahlreiche Verfahren, mithilfe deren die Daten bzw. die Befehlssignale mehr oder weniger sicher "verschlüsselt" übertragen und dann beim Empfänger wieder entschlüsselt und auf ihre Richtigkeit hin überprüft werden. Derartige Verfahren sind seit langer Zeit bekannt und in vielen sicherheitsrelevanten Bereichen eingesetzt.

Die Patentschrift DE 44 16 705 C1 beschreibt ein Verfahren zum Betrieb einer elektronischen Sicherungsvorrichtung, insbesondere einer elektronischen Wegfahrsperre für ein Fahrzeug. Zur Erhöhung der Sicherheit des zu übertragenden Signals wird dies vom Sender mithilfe eines mathematischen Algorithmus in einem Wechselcodewort codiert und gesendet. Der Empfänger decodiert das empfangene Codewort mithilfe eines zum vorherigen Algorithmus inversen ebenfalls mathematischen Algorithmus und zerlegt dies in dessen frühere Bestandsteile. Mit einem gleichen Algorithmus wie beim Sender erzeugt der Empfänger weiter ein Wechselcodewort und vergleicht dies mit dem empfangenen Codewort. Bei Übereinstimmung der beiden Codeworte erzeugt der Empfänger ein Steuersignal wie zum Beispiel ein Signal zur Freigabe der Wegfahrsperre des Fahrzeugs.

Die Offenlegungsschrift DE 196 52 256 A1 beschreibt ein Verfahren zur Sicherung der Datenübertragung zwischen Steuereinheiten in einem Fahrzeug, die über einen Datenbus miteinander verbunden sind. Demnach überträgt eine der Steuereinheiten eine Zufallsbitfolge über den Datenbus und in allen Steuereinheiten wird ein Schlüsselcode mit der Zufallsbitfolge und einem internen Schlüssel erstellt. Zur sicheren Datenübertragung werden die Daten von der Daten sendenden Steuereinheit mit dem Schlüsselcode verschlüsselt und über den Datenbus an eine Daten empfangende Steuereinheit gesendet. Die Steuereinheit, die die Daten empfängt, überprüft die Daten mithilfe von demselben Schlüsselcode auf ihre Korrektheit und bei einer bestandenen Überprüfung führt entsprechende Reaktionen auf diese empfangenen Daten durch.

Die Offenlegungsschrift DE 101 34 837 A1 beschreibt ein Verfahren zum fernbedienten Ver- und Entriegeln eines Fahrzeugs. Zum Durchführen einer fernbedienten Aktion, sprich eines funkbasierten Ver- oder Entriegeln eines Fahrzeugs sendet der Fahrzeugbediener über einen mobilen Sender einen Code in Form eines Datentelegramms an den fahrzeugseitigen Empfänger. Der Empfänger vergleicht den empfangenen Code mit einem Erwartungswert und im Falle einer Übereinstimmung führt dieser dann eine entsprechende Aktion durch, sprich ver- oder entriegelt das Fahrzeug. Zur Erhöhung der Sicherheit wird sowohl im Sender als auch im Empfänger je eine Uhr angeordnet, wobei die beiden, nämlich die senderseitige und die empfängerseitige Uhren untereinander synchronisiert sind. Beim Senden von Daten wird aus der jeweils aktuellen Sendeuhrzeit eine Zeitinformation abgeleitet. Diese Zeitinformation wird dem zu sendenden Datentelegramm hinzugefügt und mit dem Befehlssignal an den Empfänger gesendet. Der Empfänger extrahiert dann die Zeitinformation aus dem empfangenen Datentelegramm und überprüft, ob Zeitinformation in einem bestimmten Zeitfenster relativ zur jeweils aktuellen Empfängeruhrzeit liegt. Erst bei einer gültigen Bewertung gibt der Empfänger ein Steuersignal zum Ver- bzw. Entriegeln des Fahrzeugs.

Eine weitere Offenlegungsschrift DE 10 2005 035 263 A1 beschreibt ein Verfahren. Demnach werden die sicherheitsrelevanten Daten in der Steuereinrichtung unter Anwendung eines Algorithmus codiert und die codiert übermittelten Daten werden beim Empfänger auf ihre Legitimation für eine Aktion wie einen Zugriff auf das Fahrzeug geprüft und erst bei einer erfolgten Überprüfung gibt der Empfänger eine Zugriffsfreigabe.

Alle oben beschriebene Verfahren weisen einen gemeinsamen Nachteil auf. Dieser ist, dass die Reaktion auf einen Befehl bzw. auf empfangene Daten erst dann durchgeführt wird, wenn eine Sicherheitsprüfung in Form von einer Entschlüsselung, einem Codewortvergleich, oder einer Prüfung von bestimmten Werten auf dessen Korrektheit erfolgt ist. Eine derartige Sicherheitsprüfung braucht eine Rechenzeit, die zwangsläufig zu einer Verzögerung entsprechender Reaktion führt.

Allerdings ist eine Sicherheitsprüfung bei den sicherheitsrelevanten Aktionen wie zum Beispiel Freigabe der Wegfahrsperre eines Fahrzeugs, Ver-/Entriegeln einer Fahrzeugtür unverzichtbar.

Daher liegt die Aufgabe der vorliegenden Erfindung darin, ein Verfahren der eingangs genannten Art anzuzeigen, welches ein schnelles Durchführen der Reaktion auf Daten zu ermöglicht, ohne dabei an Sicherheit bei der Übertragung von Daten bzw. beim Durchführen von Reaktionen auf die Daten einzubüssen. Ferner liegt die Aufgabe der vorliegenden Erfindung darin, eine Vorrichtung zu schaffen, mithilfe dieser das erfindungsgemäße Verfahren durchgeführt werden kann.

Diese Aufgabe ist erfindungsgemäß gelöst durch ein Verfahren bzw. eine Vorrichtung mit den Merkmalen der unabhängigen Ansprüche. Vorteilhafte Weiterbildungen der Erfindung ergeben sich aus den Unteransprüchen, wobei auch Kombinationen der Merkmale miteinander denkbar sind.

Kerngedanke der Erfindung liegt darin, die Daten, die sicherheitsrelevant sind, mit zumindest einer verschlüsselten Signatur gemeinsam zu übertragen. Vor dem Senden der Daten wird eine Signatur erstellt und mit den Daten gemeinsam in einer Botschaft übertragen. Das Steuergerät, das die Botschaft empfängt, zerlegt die Botschaft in Daten und Signatur und vergleicht die empfangene Signatur mit eigener Signatur. Im Falle einer Übereinstimmung beider Signaturen führt das Gerät eine Aktion bzw. Reaktion auf die Daten durch. Im Falle einer Nichtübereinstimmung beider Signaturen verwirft das Gerät vorzugsweise die Daten.

Die Signaturen werden erfindungsgemäß in folgenden Schritten erstellt. Die Steuergeräte, die Daten senden und/oder empfangen bzw. Reaktionen auf diese empfangenen Daten durchführen, erhalten während der Initialisierungsphase der Steuergeräte einen Sicherheitsschlüssel (SK, Secret Key). Aus diesem Sicherheitsschlüssel (SK, Secret Key) wird mittels des ersten Algorithmus (A1) die Sicherheitsschlüsselreihe (SK-Reihe, Secret Key-Reihe) berechnet. Ferner wird aus dieser Sicherheitsschlüsselreihe (SK-Reihe, Secret Key-Reihe) mittels des zweiten Algorithmus (A2) der erste Reihenwert (RW(1)) berechnet. Dieser erster Reihenwert (RW(1)) wird mit der Sicherheitsschlüsselreihe (SK-Reihe, Secret Key-Reihe) verknüpft und aus der Verknüpfung wird die erste Signatur (SN(1)) erstellt. Die oben beschriebenen Schritte können werksseitig während der Herstellung des Gesamtsystems, in dem die Steuergeräte eingebaut sind, oder in den zugelassenen Werkstätten durchgeführt werden. Während des Betriebs werden für weitere Daten weitere Signaturen erstellt. Es wird aus dem vorherigen Reihenwert (RW(1) bzw. RW(n)) mittels des zweiten Algorithmus (A2) ein neuer Reihenwert (RW(2) bzw. RW(n+1)) berechnet. Dieser neue Reihenwert (RW(2) bzw. RW(n+1)) wird mit der Sicherheitsschlüsselreihe (SK-Reihe, Secret Key-Reihe) verknüpft und aus der Verknüpfung wird dann eine neue Signatur (SN(2) bzw. SN(n+1)) erstellt.

Die Berechnung der neuen Reihenwerte und Erstellung neuer Signaturen werden bei Daten sendenden Steuergeräten nach dem Senden von vorheriger Botschaft und vor dem Bereitstellen von nächster Botschaft durchgeführt. Analog werden die Berechnung der neuen Reihenwerte und Erstellung neuer Signaturen nach dem Durchführen der Aktion bzw. Reaktion auf die vorherigen Daten und vor dem Empfang von nächster Botschaft durchgeführt.

Dadurch kann die Zeiten zum Verschlüsseln bzw. Entschlüsseln von Daten entfallen. Die nicht zu sichernde Reaktionen können ungeprüft erfolgt werden.

Da die zu Daten an sich unverschlüsselt übertragen werden, benötigt das System keine zusätzliche Übertragungsbandbreite, die für verschlüsselte Daten unabdingbar sind.

Ein zeitaufwändiger mehrfacher Austausch von Sicherheitsdaten zwischen dem Sender und dem Empfänger entfällt ebenso wie die damit verbundene Zeitverzögerung von Reaktionen.

Die mit den Daten verbundenen, zu sichernden Reaktionen wie z.B. Entriegeln des Fahrzeugs können ohne durch die aufwendige Datenver-/entschlüsselung entstandene Zeitverzögerung erfolgen.

Der erforderliche Speicherplatz für die Signaturen ist vergleichsweise gering.

Die Algorithmen zur Berechung der Sicherheitsschlüsselreihe (SK-Reihe, Secret Key-Reihe), Reihenwerte (RW), Signaturen (SN) können beliebig ausgewählt werden. Als Algorithmen können die bereits bekannten Funktionen wie Hash-Funktion, MD5-Funktion (Message Digest Algorithm 5 Function), RIPEMD-Funktion (RACE Integrity Primitives Evaluation Message Digest Function) verwendet werden. Es muss lediglich sichergestellt werden, dass die Algorithmen (A) sowie die Sicherheitsschlüsseln (Secret Keys) von den über die Daten untereinander kommunizierenden Steuergeräten miteinander abgestimmt werden, sodass nur die Signaturen von authentifizierten Steuergeräten zugelassen werden und vor einer unbefugten Manipulation geschützt werden.

Im Folgenden wird die Erfindung anhand der Ausführungsbeispiele unter zu Hilfenahme von Figuren näher erläutet. Die gleichen Elemente oder die Elementen mit gleicher Eigenschaft in den verschiedenen Figuren werden mit denselben Bezugszeichen gekennzeichnet.

Es zeigen:
- Figur 1:: Blockschaltbild zum Erstellen einer erfindungsgemäßen Signatur,
- Figur 2:: Blockschaltbild zur erfindungsgemäßen Datenübertragung,
- Figur 3:: Ablaufdiagramm zum Erstellen einer erfindungsgemäßen Signatur, zur Datenübertragung von Daten und zum Durchführen der Reaktion auf die Daten mit dem erfindungsgemäßen Verfahren,
- Figur 4:: Ablaufdiagramm zur Datenübertragung und zum Durchführen der Reaktion auf die Daten mit einem Verfahren nach dem Stand der Technik,
- Figur 5:: Ablaufdiagramm zur Datenübertragung und zum Durchführen der Reaktion auf die Daten mit dem erfindungsgemäßen Verfahren.

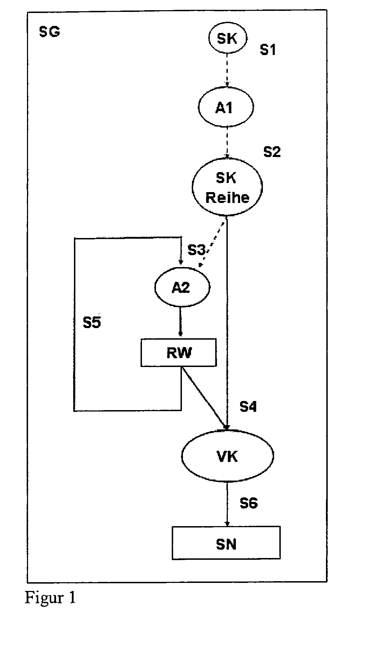

In der Figur 1 ist das Verfahren zum Erstellen einer erfindungsgemäßen Signatur dargestellt. Erfindungsgemäß erhält jedes an der Datenübertragung bzw. Bearbeitung der Daten (D) teilnehmende Steuergerät (SG) einen Sicherheitsschlüssel (SK, Secret Key) (S1). Dieser Sicherheitsschlüssel (SK) kann ein Code sein. Vorzugsweise erhält das Steuergerät (SG) den Sicherheitsschlüssel (SK) werksseitig während der Produktion vom Gesamtsystem. Je nach Bedarf kann das Steuergerät (SG) den Sicherheitsschlüssel (SK) aber auch in zugelassenen Werkstätten beim Austausch vom Steuergerät (SG) erhalten.

Die Steuergeräte (SG), die Daten (D) senden und/oder empfangen bzw. Reaktionen (RA) auf diese empfangenen Daten (D) durchführen, berechnen aus diesem Sicherheitsschlüssel (SK) mittels des ersten Algorithmus (A1) eine Sicherheitsschlüsselreihe (SK Reihe, Secret Key Reihe) (S2). Aus dieser Sicherheitsschlüsselreihe (SK Reihe) wird mittels des zweiten Algorithmus (A2) der erste Reihenwert (RW(1)) berechnet (S3). Dieser erster Reihenwert (RW(1)) wird mit der Sicherheitsschlüsselreihe (SK Reihe) verknüpft (S4) und aus der Verknüpfung wird die erste Signatur (SN(1)) für die ersten Daten (D(1)) erstellt (S6). Für die zweiten Daten (D(2)) wird ein neuer Reihenwert (RW(2)) aus dem vorherigen Reihenwert (RW(1)) mittels des zweiten Algorithmus (A2) berechnet (S5). Dieser neue Reihenwert (RW(2)) wird mit der Sicherheitsschlüsselreihe (SK-Reihe) verknüpft und aus der Verknüpfung wird dann die zweite Signatur (SN(2)) für die zweiten Daten (D(2)) erstellt. Weitere Signaturen können so rekursiv nach oben beschriebenen Schritten ermittelt werden. Die Schritte (S1, S2, S3) werden vorzugsweise werksseitig während der Herstellung des Gesamtsystems, in dem die Steuergeräte eingebaut sind, oder in den zugelassenen Werkstätten durchgeführt. Die Schritte (S4, S5, S6) werden während des Betriebs vom Steuergerät (SG) rekursiv durchgeführt.

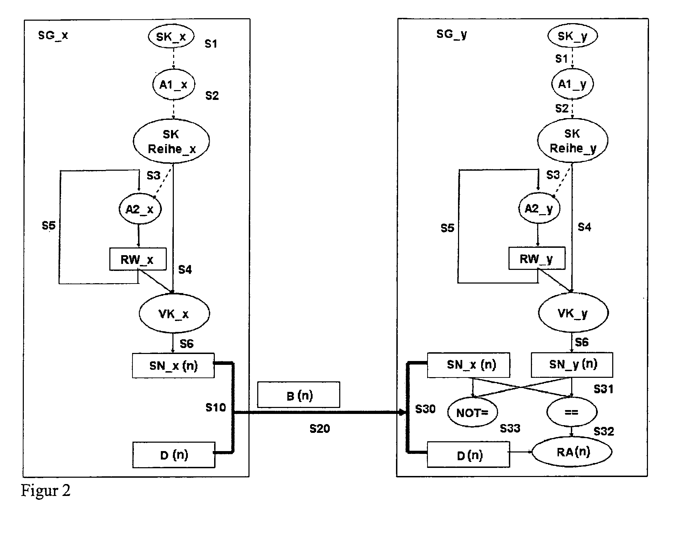

In der Figur 2 ist das erfindungsgemäße Verfahren zum Erstellen einer Signatur, zur Datenübertragung von Daten und zum Durchführen der Reaktion auf die Daten mithilfe eines Ausführungsbeispiels mit zwei Steuergeräten in einem Ablaufdiagramm schematisch dargestellt. In einem Ablaufdiagramm werden zwei Steuergeräte: SG_x und SG_y angezeigt. Das Daten sendende Steuergerät SG_x erstellt seinerseits die Signatur SN_x(n) für die Daten D(n). Dabei werden die Schritte S1 bis S3 während der Initialisierungsphase der Steuergeräte SG_x, SG_y und die Schritte S4 bis S6 im Steuergerät SG_x während der Senderuhezeit, nämlich nach dem Senden von vorheriger Botschaft B(n-1) und vor dem Senden von aktueller Botschaft B(n), genauer gesagt vor dem Bereitstellen der zu sendenden Daten D(n), durchgeführt. Das Daten empfangende bzw. bearbeitende Steuergerät SG_y erstellt synchron zum Steuergerät SG_x eine weitere Signatur SN_y(n) zur Authentifikation von der empfangenden Botschaft D(n), nämliche von der empfangenden Signatur SN_x(n). Dabei werden die Schritte S1 bis S3 während der Initialisierungsphase der Steuergeräte SG_x, SG_y und die Schritte S4 bis S6 im Steuergerät SG_y analog zum Steuergerät SG_y während der Bearbeitungsruhezeit, nämlich nach dem Bearbeiten von vorheriger Botschaft B(n-1) und vor dem Empfang von aktueller Botschaft B(n) durchgeführt.

Beim Senden von Daten D(n) werden die Daten D(n) mit der entsprechenden Signatur SN_x(n) zusammen in einer gemeinsamen Botschaft B(n) hinzugefügt (S10) und an Steuergerät SG_y gesendet (S20). Diese Botschaft B(n) wird vom Steuergerät SG_y wieder in Daten D(n) und Signatur SN_x(n) zerlegt S(30). Um sicherzustellen, dass diese Botschaft B(n) bzw. die Daten D(n) tatsächlich vom autorisierten Steuergerät SG_x gesendet worden sind, wird die Signatur SN_x(n) mit eigener vor dem Empfang der Botschaft B(n) erstellter Signatur SN_y(n) verglichen (S31). Im Falle einer Übereinstimmung von beiden Signaturen SN_x(n) und SN_y(n) werden die Daten D(n) bearbeitet und die Aktion bzw. Reaktion (RA(n)) auf diese Daten durchgeführt (S32). Im Falle einer Nichtübereinstimmung werden die Daten D(n) samt der Signatur SN_x(n) verworfen (S33).

Die Bereitstellung der für die nächste Botschaft (B(n+1)) bzw. nächste Aktion (RA(n+1)) benötigten Signatur (SN(n+1)) kann auch unmittelbar vor dem Bereitstellen der aktuellen Botschaft (B(n)) bzw. unmittelbar vor dem Bearbeiten der aktuellen Aktion (RA(n)) durchgeführt werden.

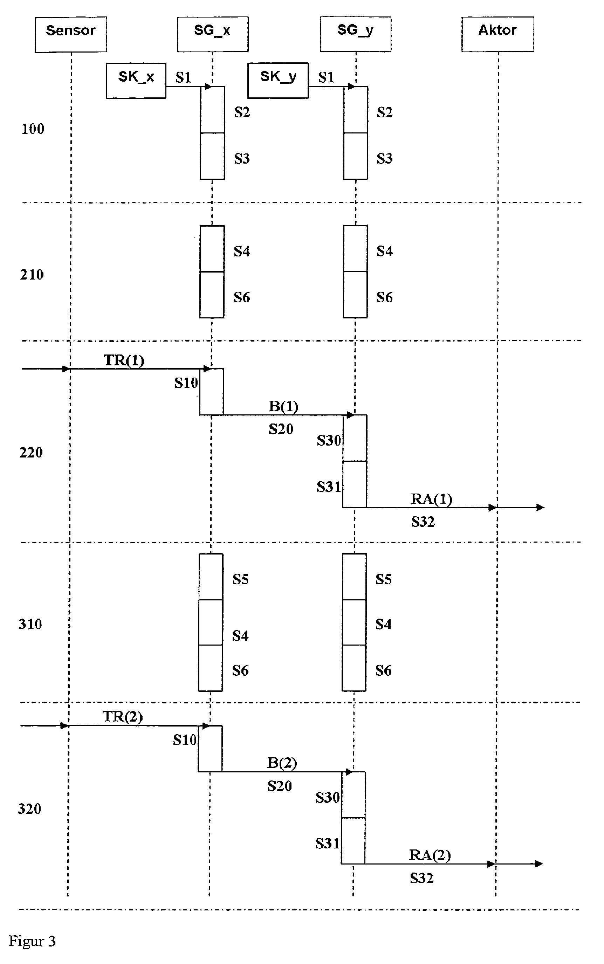

In der Figur 3 wird das erfindungsgemäße Verfahren in einem Ablaufdiagramm veranschaulicht. Die Steuergeräte (SG_x bzw. SG_y), das die Daten senden oder die Daten empfangen bzw. die Reaktion auf diese Daten durchführen, erhalten während der Initialisierungsphase (100) je einen Sicherheitsschlüssel (SK_x bzw. SK_y) (S1). Aus diesem Sicherheitsschlüssel (SK_x bzw. SK_y) wird mittels eines ersten Algorithmus (A1_x bzw. A1_y) Sicherheitsschlüsselreihe (SK Reihe_x bzw. SK Reihe_y) berechnet (S2). Aus dieser Sicherheitsschlüsselreihe (SK Reihe_x bzw. SK Reihe_y) wird mittels eines zweiten Algorithmus (A2_x bzw. A2_y) der erste Reihenwert (RW_x(1) bzw. RW_y(1)) berechnet (S3). Dieser Schritt S3 wird vorzugsweise während der Initialisierungsphase (100) durchgeführt. Aber je nach der Ausführung kann dieser Schritt (S3) auch während der ersten Betriebsphase (210) durchgeführt werden. Der erste Reihenwert (RW_x(1) bzw. RW_y(1)) wird mit der Sicherheitsschlüsselreihe verknüpft (S4) und aus dieser Verknüpfung wird die erste Signatur (SN_x(1) bzw. SN_y(1)) erstellt (S6).

Zum Senden von Daten (D(1)) werden die Daten (D(1)) mit der Signatur (SN_x(1)) gemeinsam in einer Botschaft (B(1)) beim Daten sendenden Steuergerät (SG_x) hinzugefügt (S10). Diese Botschaft (B(1)) wird dann an Steuergerät (SG_y) gesendet (S20). Diese Übertragung von Botschaft (B(1)) (S20) kann drahtlos über Funksignal aber auch drahtgebunden über ein Bussystem erfolgt werden.

Nach dem Empfangen von Botschaft (B(1)) wird diese Botschaft (B(1)) vom Daten empfangenden bzw. die Reaktion auf diese Daten durchführenden Steuergerät (SG_y) in Daten (D(1)) und Signatur (SN_x(1)) zerlegt. Die empfangene Signatur (SN_x(1)) wird mit interner bereits vor dem Empfang der Botschaft B(n) berechneter Signatur (SN_y(1)) verglichen (S30). Bei einer Übereinstimmung der empfangenen Signatur (SN_x(1)) mit der internen vorher berechneten Signatur (SN_y(1)) wird eine Aktion bzw. Reaktion (RA(1)) auf die empfangenen Daten (D(1)) durchgeführt (S31). Bei einer Nichtübereinstimmung wird keine Aktion bzw. Reaktion auf diese empfangenen Daten (D(1)) durchgeführt (S32).

Nach dem Senden der Botschaft (B(1)) wird im Steuergerät (SG_x) ein neuer Reihenwert (RW_x(2)) für nächste Daten (D(2)) aus dem vorherigen Reihenwert (RW_x(1)) mithilfe vom zweiten Algorithmus (A2_x) berechnet (S(5)). Dieser neue Reihenwert (RW_x(2)) wird mit der Sicherheitsschlüsselreihe (SK Reihe_x) verknüpft (S4) und aus der Verknüpfung wird dann eine neue Signatur (SN_x(2)) erstellt (S(6)).

Analog wird beim Daten empfangenden bzw. die Reaktion auf diese Daten durchführenden Steuergerät SG_y nach dem Durchführen der Reaktion (RA(1)) ebenfalls ein neuer Reihenwert (RW_y(2)) für nächste Daten (D(2)) aus dem vorherigen Reihenwert (RW_y(1)) mithilfe vom zweiten Algorithmus (A2_y) berechnet (S(5)). Dieser neue Reihenwert (RW_y(2)) wird mit der Sicherheitsschlüsselreihe (SK Reihe_y) verknüpft (S4) und aus der Verknüpfung wird dann eine neue Signatur (SN_y(2)) erstellt (S(6)).

Die Algorithmen (A1_x, A1_y, A2_x, A2_y) und die Sicherheitsschlüssel (SK_x, SK_y) sind miteinander so abgestimmt, dass die synchron erstellen Signaturen SN_x(n) und SN_y(n) zwischen den zur Datenkommunikation autorisierten Steuergeräten (SG_x, SG_y) identisch sind oder zumindest zueinander korrespondieren.

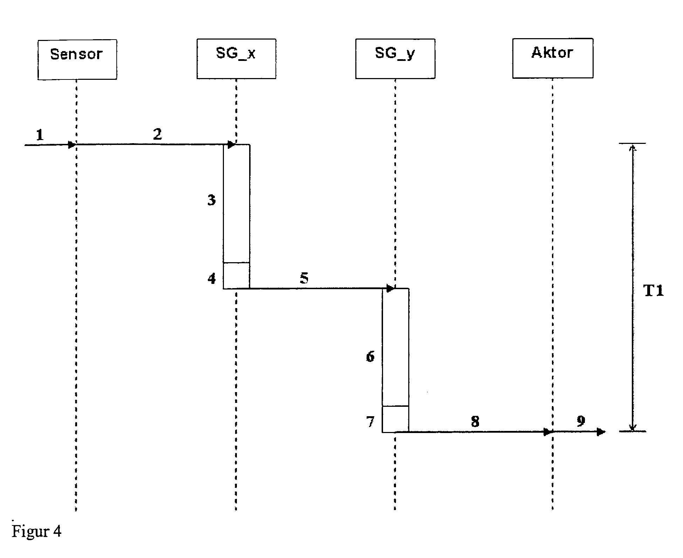

In der Figur 4 wird das Verfahren zur Übertragung von Daten bzw. zum Durchführen von Reaktion auf die Daten nach dem Stand der Technik mithilfe eines Ablaufdiagramms angezeigt. Der Sensor erfasst ein Signal (1) und löst einen Trigger beim Steuergerät SG_x aus (2). Das Steuergerät SG_x bearbeitet das Signal in Daten und je nach Ausführungen entweder verschlüsselt die Daten (3) und/oder fügt weitere sicherheitsrelevanten Daten hinzu (4). Die verschlüsselten Daten werden dann weiter an Steuergerät SG_y gesendet (5), welcher diese Daten bearbeitet und als Reaktion auf diese Daten beispielsweise einen Aktor betätigt (8). Die Daten werden beim Empfänger bzw. im Steuergerät SG_y entschlüsselt (6) und auf ihre Richtigkeit und Zulässigkeit hin geprüft (7). Nach erfolgter Authentifikation sendet das Steuergerät SG_y ein Signal an Aktor und führt eine Aktion bzw. eine Reaktion auf die empfangenen Daten durch (8, 9). Wie in der Figur zu sehen ist, die Dauer T1 zwischen dem Erfassen vom Signal bis zum Durchführen der Reaktion dauert relativ lange Zeit, da die zu übertragenden Daten vor dem Senden verschlüsselt und nach dem Empfang entschlüsselt werden müssen, um zu sicherstellen, dass die Daten vor einer unbefugten Manipulation gesichert werden.

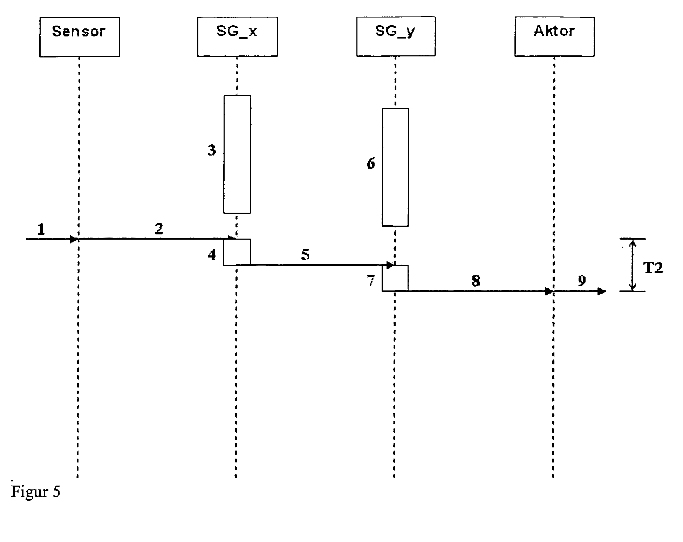

In der Figur 5 ist das erfindungsgemäße Verfahren zur Übertragung von Daten bzw. zum Durchführen von Reaktion auf die Daten mithilfe eines Ablaufdiagramms angezeigt. Der Sensor erfasst ein Signal (1) und löst einen Trigger beim Steuergerät SG_x aus (2). Das Steuergerät SG_x bearbeitet das Signal in Daten und fügt die Daten und die Signatur in einer Botschaft hinzu (4). Dabei wird die Signatur im Vorfeld vor dem Erhalten vom Signal bereits berechnet (3). Die Botschaft bestehend vorzugsweise aus Daten und Signatur wird dann weiter an Steuergerät SG_y gesendet (5). Die Botschaft wird beim Empfänger bzw. im Steuergerät SG_y in Daten und Signatur zerlegt und die empfangene Signatur wird mit der im Steuergerät abgespeicherten ebenfalls im Vorfeld erstellten (6) Signatur verglichen (7). Nach dem erfolgten Authentifikation sendet das Steuergerät SG_y ein Signal an Aktor und führt eine Aktion bzw. eine Reaktion auf die empfangenen Daten durch (8, 9). Wie in der Figur zu sehen ist, die Dauer T2 zwischen dem Erfassen vom Signal (2) bis zum Durchführen der Reaktion (8) dauert wesentlich weniger Zeit als beim Verfahren nach der Figur 3. Dies ist dadurch erreicht, dass die zeitaufwendige Bereitstellung der Signaturen (3, 6) bereits vor dem Eingang des Triggersignals (2) bzw. Empfang von Botschaft (5) abgeschlossen ist.

Um eine Übertragung von Daten zwischen mehr als zwei Steuergeräten zu ermöglichen, können in der Botschaft neben den Daten und der Signatur noch weitere Informationen erhalten sein, die eindeutig jedem diese Botschaft sendenden Steuergerät zugeordnet werden können.

## Patentansprüche

1. Verfahren zur Übertragung von Daten **dadurch gekennzeichnet, dass** die Daten mit zumindest einer Signatur in einer gemeinsamen Botschaft gesendet werden, wobei die Signatur in folgenden Schritten erstellt wird:
1) während der Initialisierungsphase erhält ein Sende- und/oder Empfangsgerät einen Sicherheitsschlüssel (SK),
2) aus diesem Sicherheitsschlüssel (SK) wird mittels eines ersten Algorithmus (A1) eine Sicherheitsschlüsselreihe (SK Reihe) berechnet,
3) dann wird aus dieser Sicherheitsschlüsselreihe (SK Reihe) mittels eines zweiten Algorithmus (A2) ein erster Reihenwert (RW(1)) berechnet,
4) dieser erster Reihenwert (RW(1)) wird mit der Sicherheitsschlüsselreihe (SK Reihe) verknüpft und aus der Verknüpfung wird eine erste Signatur (SN(1)) erstellt,
5) für weitere Signaturen (SN(2), ... SN(n+1), ...) wird aus dem vorherigen Reihenwert (RW(n)) mittels des zweiten Algorithmus (A2) ein neuer Reihenwert (RW(n+1)) rekursiv berechnet,
6) dieser neue Reihenwert (RW(n+1)) wird mit der Sicherheitsschlüsselreihe (SK Reihe) verknüpft und aus der Verknüpfung wird dann die neue Signatur (SN(n+1)) erstellt.

2. Verfahren nach Anspruch 1, **dadurch gekennzeichnet, dass**
1) zumindest zwei Steuergeräte (SG_x bzw. SG_y), die die Daten senden und/oder empfangen bzw. die Reaktion auf diese Daten durchführen, je einen Sicherheitsschlüssel (SK_x bzw. SK_y) erhalten,
2) mit diesem Sicherheitsschlüssel (SK_x bzw. SK_y) wird mittels je eines ersten Algorithmus (A1_x bzw. A1_y) jeweils eine Sicherheitsschlüsselreihe (SK Reihe_x bzw. SK Reihe_y) berechnet,
3) mit dieser Sicherheitsschlüsselreihe (SK Reihe_x bzw. SK Reihe_y) wird mittels eines zweiten Algorithmus (A2_x bzw. A2_y) jeweils ein erster Reihenwert (RW_x(1) bzw. RW_y(1)) berechnet,
4) der erste Reihenwert (RW_x(1) bzw. RW_y(1)) wird mit der Sicherheitsschlüsselreihe verknüpft und aus dieser Verknüpfung wird eine erste Signatur (SN_x(1) bzw. SN_y(1)) erstellt,
5) zum Senden von Daten (D(1)) wird in einer zu sendenden Botschaft (B(1)) zumindest eine Signatur (SN_x(1)) zu den Daten (D(1)) beim Sendegerät (SG_x) hinzugefügt,
6) nach dem Empfangen von Botschaft (B(1)) wird diese Botschaft (B(1)) beim Empfangsgerät (SG_y) in Daten (D(1)) und Signatur (SN_x(1)) zerlegt,
7) die empfangene Signatur (SN_x(1)) wird vom Empfangsgerät (SG_y) mit interner bereits vor dem Empfang der Botschaft (B(1)) berechneter interner Signatur (SN_y(1)) verglichen.

3. Verfahren nach Anspruch 2, **dadurch gekennzeichnet, dass** der Empfanggerät (SG_y)bei einer Übereinstimmung der empfangenen Signatur (SN_x(1)) und der internen Signatur (SN_y(1)) eine Aktion bzw. Reaktion (RA(1)) auf die empfangenen Daten (D(1)) durchführt.

4. Verfahren nach Anspruch 2, **dadurch gekennzeichnet, dass** der Empfanggerät (SG_y)bei einer Nichtübereinstimmung der empfangenen Signatur (SN_x(1)) und der internen Signatur (SN_y(1)) die Daten (D(1)) verwirft.

5. Verfahren nach einem der vorangehenden Ansprüche, **dadurch gekennzeichnet, dass** die neue Signatur (SN(n+1)) für die nächsten Daten (D(n+1)) beim Sendesteuergerät (SG_x) nach dem Senden der aktuellen Botschaft (B(n)) und vor dem Bereitstellen von nächsten Daten (D(n+1)) erstellt wird.

6. Übertragung von Fahrzeugdaten mit einem Verfahren nach einem der vorangehenden Ansprüche.

7. Wegfahrsperre für ein Kraftfahrzeug mit einem Verfahren nach einem der Ansprüche 1 bis 5.

8. Ver-/Entriegelungseinheit für ein Kraftfahrzeug mit einem Verfahren nach einem der Ansprüche 1 bis 5.

9. Diebstahlwahnanlage für ein Kraftfahrzeug mit einem Verfahren nach einem der Ansprüche 1 bis 5.

10. Kraftfahrzeug mit zumindest einem Verfahren nach zumindest einem der Ansprüche 1 bis 5.
